(19) Europäisches Patentamt
European Patent Office
Office européen des brevets

(11) Veröffentlichungsnummer: **0 003 143**
**B1**

(12) **EUROPÄISCHE PATENTSCHRIFT**

(21) Anmeldenummer: **79100135.7**

(22) Anmeldetag: **17.01.79**

(51) Int. Cl.³: **C 08 G 77/08**, C 07 F 7/08

(54) **Verfahren zum Erhöhen des Molekulargewichts von Alkoxygruppen aufweisenden Siliciumverbindungen**

(30) Priorität: **17.01.78 DE 2801779**

(43) Veröffentlichungstag der Anmeldung:
**25.07.79 Patentblatt 79/15**

(45) Bekanntmachung des Hinweises auf die Patenterteilung:
**29.10.80 Patentblatt 80/22**

(84) Benannte Vertragsstaaten:
**BE DE FR GB NL**

(56) Entgegenhaltungen:
**DE - C - 886 075**
**FR - A - 950 446**
**US - A - 3 773 818**

(73) Patentinhaber: **WACKER-CHEMIE GMBH**
**Prinzregentenstrasse 22**
**D - 8000 München 22 (DE)**

(72) Erfinder: **Deubzer, Bernward, Dr.**
**Virchowstrasse 14**
**D - 8263 Burghausen (DE)**
**Egerter, Norbert**
**Birkenweg 6**
**D - 8261 Emmerting (DE)**

**EP 0 003 143 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zum Erhöhen des Molekulargewichts von Alkoxygruppen aufweisenden Siliciumverbindungen

Beispielsweise aus US—PS 3 634 321 (ausgegeben 11. Januar 1972, D.C. Ungent et al., assignors to Owens-Illinois, Inc.) ist ein Verfahren zum Herstellen eines Organopolysiloxans durch Hydrolyse eines Gemisches aus Organoalkoxysiloxanen bei erhöhter Temperatur bekannt. Gegenüber den bisher bekannten Verfahren dieser Art hat das erfindungsgemäße Verfahren insbesondere den Vorteil, daß es leichter eine Regelung des Ausmaßes der Hydrolyse der Alkoxygruppen und damit leichter eine Regelung des Molekulargewichts des zu erzeugenden Polysiloxans ermöglicht. Weiterhin entfällt bei dem erfindungsgemäßen Verfahren der Zeit- und Energieaufwand für das bei den vorbekannten Verfahren erforderliche, verhältnismäßig lange Erhitzen unter Rückfluß und schließlich auch der Aufwand für das Neutralisieren des Katalysators, wenn der Katalysator bei der Weiterverarbeitung des Produkts stört. Schließlich kann bei dem erfindungsgemäßen Verfahren der bei der Hydrolyses abgespaltene Alkohol leichter als bisher gewonnen werden.

Gegenstand der Erfindung ist ein Verfahren zum Erhöhen des Molekulargewichts von Si-gebundene Alkoxygruppen als zumindest im wesentlichen einzige reaktionsfähige Gruppen aufweisenden Siliciumverbindungen durch Hydrolyse von Si-gebundenen Alkoxygruppen bei erhöhter Temperatur, dadurch gekennzeichnet, daß das Wasser in Form von Hydratwasser mindestens eines Salzes des Ammoniumhydroxide und/oder Metalls der I. bis III. Hauptgruppe des Periodensystems der Elemente nach Mendeleeff und in Mengen von mindestens 8 g je Grammol zu hydrolysierender Alkoxygruppe dem Reaktionsgefäß zugeführt, der Alkohol im Maße seiner bildung abdestilliert und die Temperatur zumindest auf Raumtemperatur gesenkt wird, bevor sich ein festes Produkt gebildet hat.

Als Siliciumverbindungen, die Si-gebundene Alkoxygruppen als zumindest im wesentlichen einzige reaktionsfähige Gruppen aufweisen, können auch im Rahmen der Erfindung beliebige Siliciumverbindungen mit Si-gebundenen Alkoxygruppen als zumindest im wesentlichen einzigen reaktionsfähigen Gruppen eingesetzt werden, bei denen auch nach allen bisher bekannten Verfahren Si-gebundene Alkoxygruppen hydrolysiert werden konnten. Mit anderen Worten sind Si-gebundene Alkoxygruppen als zumindest im wesentlichen einzige reaktionsfähige Gruppen aufweisende Siliciumverbindungen solche, deren nicht durch Alkoxygruppen abgesättigten Siliciumvalenzen alle oder zumindest im wesentlichen, also zu mindestens 90% der Anzahl der Valenzen, durch unter den Reaktionsbedingungen inerte Atome und/oder Gruppen, wie Siloxansauerstoffatome und/oder Kohlenwasserstoffreste, die unter den Reaktionsbedingungen inerte Substituenten aufweisen können, abgesättigt sind.

Beispiele für Si-gebundene Alkoxygruppen als einzige reaktionsfähige Gruppen aufweisende Siliciumverbindungen sind Silane der allgemeinen Formeln

$$R_nSi(OR')_{4-n} \text{ und}$$

$$(R'O)_{3-m}SiR_mR''R_mSi(OR')_{3-m},$$

worin R gleiche oder verschiedene einwertige gegebenenfalls substituierte Kohlenwasserstoffreste, R' gleiche oder verschiedene Alkylreste mit 1 bis 5 Kohlenstoffatomen und R'' gleiche oder verschiedene zweiwertige Kohlenwasserstoffreste bedeutet, n 0, 1, 2 oder 3 und m 0, 1 oder 2 ist und Siloxane aus Einheiten der allgemeinen Formel

$$R_{n'}Si(OR')_xO_{\frac{4-n-x}{2}}$$

worin n' 0, 1, 2 oder 3, durchschnittlich 0,0 bis 2,1, x 0, 1, 2 oder 3, durchschnittlich 0,01 bis 3 und die Summe von n + x durchschnittlich höchstens 3,99 ist, und R die oben dafür angegebene Bedeutung hat.

Beispiele für Kohlenwasserstoffreste R sind Alkylreste, wie der Methyl-, Äthyl-, n-Propyl-, Isopropyl-, n-Butyl- und sec.-Butylrest, sowie Hexyl- und Octadecylreste; Alkenylreste, wie der Vinyl- und Allylrest; Cycloalkylrest, wie der Cyclohexylrest; Cycloalkenylreste, wie Cyclohexenylreste; Arylreste, wie der Phenylrest; Aralkylreste, wie o-, p- und m-Tolylreste; sowie Alkarylreste, wie der Benzylrest.

Beispiele für substituierte Kohlenwasserstoffreste R sind insbesondere Halogenalkylreste, wie der 3,3,3-Trifluoropropylrest, und Halogenarylreste, wie o-, m- und p-Chlorphenylreste.

Insbesondere wegen der leichten Zugänglichkeit sind vorzugsweise mindestens 50% der Anzahl der Reste R Methylreste. Die gegebenenfalls vorliegenden übrigen Reste R sind vorzugsweise Vinyl- und/oder Phenylreste.

Beispiele für Alkylreste R' sind außer den oben bereits genannten Alkylresten mit 1 bis 4 Kohlenstoffatomen der tert.-Butylrest, sowie Pentylreste.

Beispiele für zweiwertige Kohlenwasserstoffreste R'' sind der Äthylenrest und Phenylenreste.

Vorzugsweise beträgt n' durchschnittlich höchstens 1,8. Es können Gemische aus verschiedenen, Si-gebundene Alkoxygruppen als zumindest im wesentlichen einzige reaktionsfähige Gruppen aufweisenden Siliciumverbindungen eingesetzt werden. Es kann aber

auch nur eine einzige Art solcher Siliciumverbindungen eingesetzt werden.

Die erhöhte Temperatur bei dem erfindungsgemäßen Verfahren ist vorzugsweise diejenige, bei der der bei der Hydrolyse abgespaltene Alkohol unter dem bei dem erfindungsgemäßen Verfahren jeweils angewandten Druck aus dem Reaktionsgemisch abdestilliert. Vorzugsweise beträgt sie mindestens 30°C.

Beispiele für Salzhydrate, in denen das erfindungsgemäß in das Reaktionsgefäß eingeführte Wasser vorliegen kann, sind $Na_2Co_3 \cdot 10\ H_2O$, $Na_2CO_3 . 7\ H_2O$, $Na_2SO_4 . 10\ H_2O$, $Ca(NO_3)_2 . 6\ H_2O$, $Al_2(SO_4)_3 . 18\ H_2O$, $Na_2HPO_4 . 12\ H_2O$, $NH_4Fe(SO_4)_2 . 12\ H_2O$, $CaCL_2 . 6\ H_2O$, $NaAl(SO_4)_2 . 12\ H_2O$ und $KAl(SO_4)_2 . 12\ H_2O$, sowie $(NH_4)_2\ Fe(SO_4)_2 . 6\ H_2O$. Wie aus den vorstehenden Beispielen für Salzhydrate ersichtlich, können also als Kationen in diesen Salzen zusätzlich zu Ammonium und/oder Kationen von Elementen der I. bis III. Hauptgruppe des Periodensystems der Elemente nach Mendeleeff und Kationen anderer Elemente, insbesondere Wasserstoff und Eisen, vorliegen.

Wegen der leichten Zugänglichkeit, hohem Wassergehalt und niedrigem Sohmelzpunkt, der eine besonders leichte Verteilbarkeit in den Siliciumverbindungen, deren Molekulargewicht erfindungsgemäß erhöht werden soll, ermöglicht, trotzdem aber noch hoch genug ist, um das nach dem Abkühlen wieder kristallisierte Salz durch einfaches Filtrieren vollständig entfernen zu können, ist als Salzhydrat Natriumcarbonat-Dekahydrat, also das Salz der Formel $Na_2CO_3 . 10\ H_2O$ bevorzugt.

Der hier verwendete Ausdruck "I. bis III. Hauptgruppe" bezieht sich auf die Perioden 2 bis 6 der Gruppen I. bis III. des Periodensystems der Elemente, das hinten in Hollemann-Wiberg, "Lehrbuch der Anorganischen Chemie", 81. — 90. Aufl., Berlin-New York, 1976, eingeheftet ist.

Es können Gemische aus verschiedenen Salzhydraten eingesetzt werden. Es kann aber auch nur eine Art von Salzhydrat eingesetzt werden.

Eine obere Grenze der Menge der erfindungsgemäß einzusetzenden Salzhydrate besteht nicht. Sie ergibt sich lediglich durch wirtschaftliche Erwägungen.

Die Hydrolyse der Si-gebundenen Alkoxygruppen bei dem erfindungsgemäßen Verfahren wird selbstverständlich nicht nur durch das erfindungsgemäß dem Reaktionsgefäß zugeführte im Salz gebundene und/oder beim Erwärmen freigewordene Hydratwasser, sondern auch durch Wasser bewirkt, das bei der Kondensation von Si-gebundenen Hydroxylgruppen, die durch die Hydrolyse Si-gebundener Alkoxygruppen entstanden sind, gebildet wird.

Durch die Bestimmung der Menge des abdestillierten Alkohols ist eine einfache Regelung des Ausmaßes der Hydrolyse der Alkoxygruppen und damit eine einfache Regelung des Molekulargewichts des zu erzeugenden Polysiloxans möglich.

Vorzugsweise wird das erfindungsgemäße Verfahren beim Druck der umgebenden Atmosphäre, also bei 1.000 mbar oder etwa 1.000 mbar durchgeführt. Falls erwünscht, können aber auch höhere oder niedrigere Drücke angewendet werden.

Das erfindungsgemäße Verfahren kann absatzweise, kontinuierlich oder halbkontinuierlich durchgeführt werden.

Falls erwünscht, bzw. erforderlich, können bei dem erfindungsgemäßen Verfahren zusätzlich zu den bisher benannten Stoffen weitere Stoffe, wie Lösungsmittel, z.B. Toluol, Xylole und Cyclohexanon und/oder Organosiloxanole, mitverwendet werden.

Nach der Lurchführung des erfindungsgemäßen Verfahrens kann das dabei eingesetzte Salz, bzw. sein wasserärmeres Derivat durch einfache Filtration oder Extraktion mit Wasser abgetrennt werden.

Die erfindungsgemäß hergestellten (Organo-) Polysiloxane können überall dort eingesetzt werden, wo auch bisher (Organo-) polysiloxane eingesetzt wurden, beispielsweise als hitzeund witterungsbeständige Lacke, als Bindemittel für Glimmer und Glasgewebe, als Tränk- und Imprägnierharze und als Bestandteile von Trennbeschichtungen.

Das erfindungsgemäße Verfahren eignet sich auch zur Abspaltung restlicher Alkoxygruppen aus Diorganopolysiloxanen, die durch Umsetzung von Diorganodichlorsilanen, wie Dimethyldichlorsilan, mit Alkoholen, wie Methanol, gewonnen wurden.

### Beispiel 1

Ein Gemisch aus 650 g eines Organopolysiloxans aus 33 Molprozent Dimethylsiloxaneinheiten und 67 Molprozent Monophenylsiloxaneinheiten mit 14 Gewichtsprozent Si-gebundener Methoxygruppen und 8 Gewichtsprozent Si-gebundener n-Butoxygruppen mit einer Viskosität von 140 cSt bei 25°C und 65 g Natriumcarbonat-Dekahydrat wird unter Rühren auf 90°C erwärmt, wobei Methanol abdestilliert. Nachdem 70 ml Methanol abdestilliert sind, wird das Reaktionsgemisch mit 162 g Xylol verdünnt. Nachdem weitere 42 ml Methanol abdestilliert sind, wird das Reaktionsgemisch auf Raumtemperatur gekühlt, mit Xylol auf einen Organopolysiloxangehalt von 50 Gewichtsprozent, bezogen auf das Gesamtgewicht von Organopolysiloxan und Lösungsmittel, verdünnt und filtriert. Die Viskosität der so erhaltenen Lösung beträgt 165 cSt bei 25°C.

### Beispiel 2

Ein Gemisch aus 650 g eines Organopolysiloxans aus 62 Molprozent Dimethylsiloxaneinheiten und 38 Molprozent Monophenylsiloxaneinheiten mit 19 Gewichtsprozent Si-gebundener Methoxygruppen mit einer Viskosität von 15 cSt bei 25°C und 65 g

Natriumcarbonat-Dekahydrat wird unter Rühren auf 90°C erwärmt, wobei Methanol abdestilliert. Nachdem 107 ml Methanol abdestilliert sind, wird das Reaktionsgemisch auf Raumtemperatur abgekühlt, mit einer Mischung aus gleichen Gewichtsteilen Xylol und Cyclohexanon auf einen Organopolysiloxangehalt von 60 Gewichtsprozent, bezogen auf das Gesamtgewicht von Organopolysiloxan und Lösungsmittel, verdünnt und filtriert. Die Viskosität der so erhaltenen Lösung beträgt 320 cSt bei 25°C.

Beispiel 3

Ein Gemisch aus 480 ml Phenyltriäthoxysilan, 198 ml Methyltriäthoxysilan und 160 g Natriumcarbonat-Dekahydrat wird unter Rühren auf 90°C erwärmt, wobei Äthanol abdestilliert. Nachdem 360 ml Destillat erhalten wurden, enthält eine Probe des Organopolysiloxans in Rückstand 48 Molprozent Si-gebundene Äthoxygruppen. Nachdem insgesamt 459 ml Destillat erhalten wurden, enthält das filtrierte Organopolysiloxan noch 5 Molprozent Si-gebundene Äthoxygruppen.

Beispiel 4

450 g des Organopolysiloxans der gleichen Art, die gemaß Beispiel 1 eingesetzt wurde, werden mit 150 g eines in den endständigen Einheiten je eine Si-gebundene Hydroxylgruppe aufweisenden Organopolysiloxans aus Phenylmethylsiloxaneinheiten mit einer Viskosität von 800 cSt bei 25°C vermischt. Die so erhaltene, eine Viskosität von 119 cSt bei 25°C aufweisende Mischung, welche in 50 Gew.-%-iger Lösung in Xylol eine Viskosität von 2,6 cSt bei 25°C hätte, wird mit 60 g Natriumcarbonat-Dekahydrat vermischt und unter Rühren auf 90°C erwärmt, wobei Methanol abdestilliert. Nachdem 40 ml Methanol abdestilliert sind, wird das Reaktionsgemisch auf Raumtemperatur abgekühlt, mit Xylol auf einen Organopolysiloxangehalt von 50 Gewichtsprozent Organopolysiloxan, bezogen auf des Gesamtgewicht von Lösungsmittel und Organopolysiloxan, verdünnt und filtriert.

Die so erhaltene, eine Viskosität von 50 cSt bei 25°C aufweisende Lösung wird auf ein Blech aufgetragen und das so überzogene Blech 2 Stunden auf 200°C erhitzt. Es wird ein harter, elastischer, homogener Film erhalten.

Beispiel 5

Ein Gemisch aus jeweils 300 g des Organopolysiloxans der gleichen Art, die gemäß Beispiel 1 eingesetzt wurde und 30 g der in der folgenden Tabelle angegebenen Salzhydrate wird unter Rühren auf 90°C erwärmt, wobei Methanol abdestilliert. Dabei werden die ebenfalls in der folgenden Tabelle angegebenen Methanolmengen und Werte für die restlichen Mengen an Methoxygruppen im Organopolysiloxan erhalten.

TABELLE

| Salzhydrat | Dauer des Erwärmens Stunden | Methanol ml | Restliche Methoxygruppen Gew.–% |
|---|---|---|---|
| $Al_2(SO_4)_3 \cdot 18\ H_2O$ | 6 | 28 | 6,7 |
| $Na_2HPO_4 \cdot 12\ H_2O$ | 7 | 19 | 9,0 |
| $NH_4Fe(SO_4)_2 \cdot 12\ H_2O$ | 8 | 46 | 2,6 |

**Patentansprüche**

1. Verfahren zum Erhöhen des Molekulargewichts von Si-gebundene Alkoxygruppen als zumindest im wesentlichen einzige reaktionsfähige Gruppen aufweisenden Siliciumverbindungen durch Hydrolyse von Si-gebundenen Alkoxygruppen bei erhöhter Temperatur, dadurch gekennzeichnet, daß das Wasser in Form von Hydratwasser mindestens eines Salzes des Ammoniumhydroxyds und/oder Metalls der I. bis III. Hauptgruppe des Periodensystems der Elemente nach Mendeleeff und in Mengen von mindestens 8 g je Grammol zu hydrolysierender Alkoxygruppe dem Reaktionsgefäß zugeführt, der Alkohol im Maße seiner Bildung abdestilliert und die Temperatur zumindest auf Raumtemperatur gesenkt wird, bevor sich ein festes Produkt gebildet hat.

2. Verfahren nach Anspruch 1, dadurch gekennzeichnet, daß das Wasser in Form von Natriumcarbonat-Dekahydrat eingesetzt wird.

**Revendications**

1. Procédé pour augmenter le poids moléculaire de composés du silicium contenant des groupes alcoxy liés au silicium comme groupes réactifs au moins essentiellement uniques, par hydrolyse de groupes alcoxy liés au silicium, à température élevée, procédé caractérisé en ce qu'on amène l'eau au mélange réactionnel sous la forme d'eau d'hydratation d'au moins un sel de l'hydroxyde d'ammonium et/ou de métaux des groupes principaux I à III de la classification

périodique des éléments de Mendeleeff, en des quantités d'au moins 8 g par mole de groupe alcoxy à hydrolyser, on chasse l'alcool par distillation au fur et à mesure de sa formation, et on abaisse la température au moins jusqu'à la température ambiante avant qu'un produit solide sè soit formé.

2. Procédé selon la revendication 1, caractérisé en ce que l'eau est utilisée sous forme de carbonate de sodium décahydraté.

**Claims**

1. Process for increasing the molecular weight of silicon compounds having Si-bonded alkoxy groups as at least substantially the only reactive groups, by hydrolysing Si-bonded alkoxy groups at elevated temperature, characterised in that water, in the form of the water of hydration of at least one salt of ammonium hydroxide and/or of a metal of main groups I to III of the Periodic Table of Elements according to Mendeleev, is added to the reaction vessel in amounts of at least 8 g per gram mole of alkoxy group to be hydrolysed, the alcohol is distilled off as it is formed, and the temperature is reduced at least to room temperature before a solid product has formed.

2. Process according to claim 1, characterised in that the water is used in the form of sodium carbonate decahydrate.